# EUROPÄISCHE PATENTANMELDUNG

(11) **EP 2 760 103 A1**
(43) Veröffentlichungstag der Anmeldung: **30.07.2014**
(21) Anmeldenummer: 13152449.8
(22) Anmeldetag: 24.01.2013
(51) Int. Cl.: H02J 7/00, H02J 7/34

(54) **Symmetrieren von Kondensatorspannungen in einer Reihenschaltung von Kondensatoren**

(71) Anmelder: Siemens Aktiengesellschaft, 80333 München (DE)
(72) Erfinder: Schierling, Hubert, 91052 Erlangen (DE)

(57) **Zusammenfassung**

Die Erfindung betrifft eine Schaltungsanordnung zum Bereitstellen einer Zwischenkreisspannung (Uzk) in einem Gleichspannungs-Zwischenkreis (28). Zwei elektrische Leitelemente (38,40), zwischen denen die Zwischenkreisspannung (Uzk) anliegt, sind durch eine Reihenschaltung (50) aus Kondensatoren (46,48) verbunden. Eine Symmetrierschaltung (60) symmetriert die Kondensatorspannungen (Ucl,Uc2). Der Erfindung liegt die Aufgabe zugrunde, eine verlustarme Symmetrierung der Reihenschaltung (50) aus Kondensatoren (46,48) bereit zu stellen. Die Symmetrierschaltung (60) weist hierzu einen Transformator (64) mit einer Primärspule (84) und zumindest einer Sekundärspule (68,70) auf. Die Leitelemente (38,40) sind über die Primärspule (84) und ein dieser nachgeschaltetes, steuerbares Schaltelement (88) verbunden. Bei der zumindest einen Sekundärspule (68,70) des Transformators (64) ist jeweils ein Spulenanschluss (72,78) mit einem Anschluss (54,56) eines der Kondensatoren (46,48) und ein anderer Spulenanschluss (74, 80) mit einem anderen Anschluss (52,58) desselben Kondensators (46,48) verschaltet.

## Beschreibung

Die Erfindung betrifft eine Schaltungsanordnung und ein Verfahren zum Symmetrieren von Kondensatorspannungen in einer Reihenschaltung von Kondensatoren in der Schaltungsanordnung. Eine solche Schaltungsanordnung und ein solches Verfahren sind beispielsweise im Zusammenhang mit der Bereitstellung einer Zwischenkreisspannung in einem Gleichspannungs-Zwischenkreis z.B. eines Frequenzumrichters bekannt. Zu der Erfindung gehört entsprechend auch ein Frequenzumrichter, dessen Zwischenkreis die genannte Schaltungsanordnung aufweist.

Ein Frequenzumrichter hat die Aufgabe, eine Versorgungswechselspannung, beispielsweise eine mehrphasige Netzspannung mit 400 Volt, 50 Hertz, zunächst gleichzurichten und anschließend auf Grundlage der gleichgerichteten Spannung mittels eines Wechselrichters eine z.B. in der Frequenz steuerbare Wechselspannung bereitzustellen. Ein Frequenzumrichter kann beispielsweise zum Betreiben von elektrischen Maschinen genutzt werden. Die Gleichrichtung der Versorgungsspannung wird durch eine Einspeiseeinheit durchgeführt, welche beispielsweise Brückengleichrichter aufweisen kann. Die gleichgerichtete Spannung wird in einem sogenannten Zwischenkreis erzeugt und heißt deshalb auch Zwischenkreisspannung. Der Zwischenkreis verbindet die Einspeiseeinheit mit dem Wechselrichter über zwei Leitelemente, zwischen denen die Zwischenkreisspannung anliegt. Ein Leitelement kann beispielsweise eine Stromschiene oder auch ein Draht sein.

Um die gleichgerichtete Zwischenkreisspannung zu glätten und zusätzlich auch elektrische Energie für den Betrieb des Wechselrichters speichern oder von diesem aufnehmen zu können, können die beiden Leitelemente über Kondensatoren miteinander verbunden sein. Zu Betreiben eines solchen Frequenzumrichters müssen an gängigen Versorgungsnetzen diese Kapazitäten, d.h. die Zwischenkreiskondensatoren, in Reihe geschaltet werden, da die maximale Spannungsfestigkeit der üblicherweise verwendeten Elektrolytkondensatoren nicht für die komplette gleichgerichtete Zwischenkreisspannung ausreicht. Hierbei muss eine symmetrische Spannungsaufteilung der Reihenschaltung gewährleistet sein, da es sonst aufgrund unterschiedlicher Leckströme in den einzelnen Kondensatoren zu unerwünschten Spannungsbelastungen der einzelnen Kondensatoren kommen kann. Symmetrisch ist eine Spannungsaufteilung hierbei dann, wenn die Kondensatorspannungen der einzelnen Kondensatoren aneinander angeglichen sind.

Herkömmlicherweise werden hierzu parallel zu der Reihenschaltung aus Kondensatoren noch Widerstände geschaltet, die mit deutlich höherem Stromfluss als dem maximalen Leckstrom der Kondensatoren dimensioniert sind, um eine symmetrische Spannungsaufteilung zu gewährleisten. Der Nachteil einer solchen Symmetrierschaltung aus Widerständen liegt darin, dass dadurch nennenswert Verlustleistung entsteht, auch wenn bei gleichen Leckströmen keine Symmetrierung notwendig wäre, weil die tatsächlichen Leckströme gleich sind.

Der Erfindung liegt die Aufgabe zugrunde, eine verlustarme Symmetrierung einer Reihenschaltung aus Kondensatoren für einen Zwischenkreis bereit zu stellen.

Die Aufgabe wird durch eine Schaltungsanordnung gemäß Patentanspruch 1, einen Frequenzumrichter gemäß Patentanspruch 14 sowie ein Verfahren gemäß Patentanspruch 15 gelöst. Vorteilhafte Weiterbildungen der Erfindung sind durch die Unteransprüche gegeben.

Die erfindungsgemäße Schaltungsanordnung kann einen Bestandteil eines Gleichspannungs-Zwischenkreises bilden. Mit ihr kann mittels einer Reihenschaltung aus zumindest zwei Kondensatoren eine Zwischenkreisspannung in dem Gleichspannungs-Zwischenkreis bereitgestellt werden. Die zumindest zwei Kondensatoren bilden eine zwei elektrische Leitelemente (also etwa zwei Stromschienen oder Drähte) verbindende Reihenschaltung, so dass sich ihre einzelnen Kondensatorspannungen zu der Zwischenkreisspannung aufaddieren, die zwischen den Leitelementen durch eine Einspeiseeinheit erzeugt werden kann. Auch bei der erfindungsgemäßen Schaltungsanordnung ist eine Symmetrierschaltung zum Symmetrieren der Kondensatorspannungen bereitgestellt.

Erfindungsgemäß weist die Symmetrierschaltung aber nun einen Transformator mit einer Primärspule und zumindest einer Sekundärspule auf. Der Primärspule ist ein steuerbares Schaltelement nachgeschaltet. Diese Reihenschaltung aus Primärspule und Schaltelement verbindet ebenfalls die beiden Leitelemente miteinander. Als das steuerbare Schaltelement kann beispielsweise ein Transistor, insbesondere ein Feldeffekttransistor (FET), bereitgestellt sein.

Durch Steuern des Schaltelements kann also ein Strom in der Primärspule gesteuert werden, der durch die beiden Leitelemente gespeist wird. Die zumindest eine Sekundärspule ist jeweils einem der Kondensatoren aus der Reihenschaltung zugeordnet. "Zugeordnet" bedeutet hier, dass ein Spulenanschluss der jeweiligen Sekundärspule direkt oder über weitere Bauelemente mit einem Anschluss des jeweiligen Kondensators verschaltet ist und ein anderer Spulenanschluss derselben Sekundärspule mit einem anderen Anschluss desselben Kondensators.

Der Transformator mit seinen Spulen sowie das Schaltelement, welches der Primärspule nachgeschaltet ist, bilden ein Schaltnetzteil. Wenn das Schaltnetzteil primärseitig über die Leitelemente mit elektrischer Leistung versorgt wird, wird hierdurch sekundärseitig durch jede der Sekundärspulen die jeweilige Kondensatorspannung des zugeordneten Kondensators eingestellt. So lassen sich die Kondensatorspannungen mit Hilfe des Schaltnetzteils symmetrieren. Dabei wird von der Tatsache Gebrauch gemacht, dass die sekundärseitig induzierten Spulenspannungen an den Wicklungen des Transformators, die auf demselben Kern liegen, vom Windungszahlverhältnis der Primärspule und der Sekundärspulen abhängig sind. Das Schaltnetzteil braucht in vorteilhafter Weise nur eine Energierichtung, nämlich von der Primärseite zur Sekundärseite, und erfordert keine Anpassung an die Höhe der Zwischenkreisspannung, da die Primärspule direkt mit den Leitelementen verbunden ist und die sekundärseitig induzierten Spannungen vom Windungszahlverhältnis abhängig sind.

Bevorzugt ist hierbei vorgesehen, dass der Transformator für jeden Kondensator jeweils eine Sekundärspule aufweist. Die Idee dieser Weiterbildung besteht darin, dass ein Schaltnetzteil mit einem Transformator mit mehreren Sekundärwicklungen, nämlich einer pro Kondensator, bei gleicher Windungszahl auf der Sekundärseite gleiche Spannungen an jedem Kondensator erzeugt. Hierdurch stellt sich von alleine die benötigte Symmetrierung ein. Eine suboptimale Lösung würde nur für einen oder einige der Kondensatoren eine Sekundärwicklung vorsehen. Bei gleichem Windungszahlen zweier Sekundärspulen bedeutet "Symmetrieren", dass die Kondensatorspannungen der zugeordneten Kondensatoren aneinander angeglichen werden.

Von der Erfindung ist auch eine Lösung mit unterschiedlicher Windungszahl zweier oder mehrerer Sekundärspulen umfasst. Dieser Aspekt ist wichtig, weil man damit Kondensatoren unterschiedlicher Nennspannung symmetrieren kann. "Symmetrieren" heißt dann, dass das Verhältnis von tatsächlicher Spannung zur Nennspannung bei beiden Kondensatoren gleich ist. Vorteil ist, dass Kondensatorkosten und -bauraum kleiner werden, weil die erforderliche Gesamtspannung (Bemessungswert der Zwischenkreisspannung) genauer getroffen werden kann. Heutzutage geht das nicht, weil die Leckströme zu unterschiedlich sind.

In einer schaltungstechnisch besonders einfach zu realisierenden Ausführungsform wird der Transformator als Einphasenflusswandler betrieben, indem eine Steuereinrichtung bereitgestellt ist, beispielsweise mit einem Mikrokontroller, die dazu ausgelegt ist, das Schaltelement der Primärspule abwechselnd in einen leitenden und einen sperrenden Zustand zu schalten und hierdurch den Transformator als Flusswandler zu betreiben.

In einer Weiterbildung dieses Ansatzes ist zumindest ein weiteres steuerbares Schaltelement der genannten Art bereitgestellt, über welches ebenfalls die Primärspule oder auch nur ein Teil der Primärspule mit einem der Leitelemente verbunden ist. Die Steuereinheit ist dann dazu ausgelegt, durch Ansteuern aller Schaltelemente eine Gegentaktflusswandlung von der Primärseite zu der zumindest einen Sekundärspule durchzuführen. Hierdurch lassen sich die Flusswandler auf der Grundlage von symmetrischen Halbbrücken oder auch ein Vollbrückenwandler realisieren. Diese weisen den Vorteil auf, dass sie mit einem höheren Wirkungsgrad realisiert werden können und die Spannungsbelastung der Schaltelemente in der Regel geringer ist.

Bevorzugt ist bei den Sekundärspulen jeweils einer der Spulenanschlüsse über eine Diode mit dem jeweiligen Kondensator verbunden. Dies ist eine preisgünstig zu realisierende Variante, um einen unkontrollierten Stromfluss durch die Spulen im Gleichspannungs-Zwischenkreis zu vermeiden.

Ein weiterer Vorteil ergibt sich, wenn man die Windungszahlen so wählt, dass die Sekundärspannungen der Sekundärspulen in der Summe etwas kleiner sind als die Zwischenkreisspannung, insbesondere zwischen 90% und 100%. Weist also der Transformator insgesamt N Sekundärspulen für N in Reihe geschaltete Kondensatoren auf, so ist bei dieser Ausführungsform ein Windungszahlenverhältnis der Windungszahlen jeder Sekundärspule zur Windungszahl der Primärspule derart ausgelegt, dass die Primärspule in jeder Sekundärspule eine Induktionsspannung induziert, die kleiner als das 1/N-fache der Zwischenkreisspannung ist. Hierdurch ergibt sich der Vorteil, dass der Flusswandler nur dann Energie überträgt, wenn eine der Kondensatorspannungen auch tatsächlich kleiner wird als die vorgesehene Kondensatorspannung, nämlich kleiner als das 1/Nfache der Zwischenkreisspannung. Ein weiterer Vorteil ist, dass auch nur durch diejenige Sekundärspule Energie abgegeben wird, bei welcher die Kondensatorspannung des zugeordneten Kondensators auch tatsächlich zu klein ist.

Eine andere Weiterbildung der Schaltungsanordnung sieht eine zusätzliche Entmagnetisierungswicklung vor, über welche eines der Leitelemente mit dem anderen Leitelement verbunden ist. Der Entmagnetisierungsspule ist hierbei noch eine Freilaufdiode nachgeschaltet. Durch die Entmagnetisierungswicklung verringert sich die Spannungsbelastung des Schaltelements der Primärspule.

Wie bereits ausgeführt, lässt sich über das Windungszahlverhältnis jeder Sekundärspule zur Primärspule der Betrag jeder Symmetrierspannung einstellen, also z.B. 1/N bei N Sekundärspulen. Eine Ausnahme hierzu stellt eine Ausführungsform der Schaltungsanordnung dar, bei welcher die Sekundärspulen auch als Entmagnetisierungswicklungen genutzt sind. Dies ist möglich, wenn die Entmagnetisierungsleistung größer als die Leckverluste in den Kondensatoren ist. Eine höhere Entmagnetisierungsleistung kann dabei auch durch entsprechende Auslegung des Transformators (höherer Magnetisierungsstrom, beispielsweise durch Vorsehen eines Luftspalts im Transformatorkern) gezielt herbeigeführt werden. Die Nutzung der Sekundärspulen als Entmagnetisierungswicklungen erfordert zum Einstellen der Symmetrierspannungen an den Sekundärspulen kein bestimmtes Windungszahlverhältnis primär/sekundär, denn die Symmetrierspannungen werden während der Entmagnetisierung induziert, während also in der Primärspule kein Strom fließt.

Ein weiterer Vorteil der Schaltungsanordnung ist, dass zum Entladen der Kondensatoren beim Abschalten des Zwischenkreises nun unabhängig von der Symmetrierschaltung ein ohmscher Entladewiderstand bereitgestellt werden kann, der frei gemäß den Entladezeitvorgaben eingestellt werden kann. Dieses ohmsche Entladewiderstandselement (bevorzugt durch zumindest ein diskretes Bauteil bereitgestellt) koppelt dann die beiden Leitelemente des Zwischenkreises.

Eine Ausführungsform sieht hierbei vor, dass der Entladewiderstand über einen Schalter mit einem der Leitelemente verschaltet ist. Hierdurch ergibt sich der Vorteil, dass durch Öffnen des Schalters während des Betriebs des Zwischenkreises keine Verlustleistung am Entladewiderstand umgesetzt wird. Ein anderer Vorteil ergibt sich, wenn der Entladewiderstand parallel zu einer Freilaufdiode oder dem genannten Schaltelement, das der Primärspule nachgeschaltet ist, geschaltet ist. Hierdurch ergibt sich der Vorteil, dass der Entladewiderstand nur für einen Bruchteil der Betriebszeit tatsächlich auf dem Zwischenkreispotential liegt, d.h. die Zwischenkreisspannung über dem Entladewiderstand abfällt. Auch hierdurch ergibt sich eine Reduktion der Verlustleistung, ohne dass aber ein Schalter zusätzlicher benötigt wird.

Die beschriebenen Topologien lassen sich in besonders vorteilhafter Weise auch mit üblichen Gerätespannungsversorgungen in dem Zwischenkreis kombinieren. Hierzu ist dann eine Zusatzspule in dem Transformator vorgesehen, welche mit einem Eingang einer Spannungsversorgungsschaltung gekoppelt ist. So kann über die Primärspule auch an diese Zusatzspule Leistung übertragen werden, die dann von der Spannungsversorgungsschaltung in eine Versorgungsspannung für beispielsweise einen Mikrokontroller oder Messschaltungen des Zwischenkreises genutzt werden kann. Da die von der Zusatzspule erzeugte Spannung proportional zur Zwischenkreisspannung ist, ist gemäß einer Weiterbildung vorgesehen, dass die Spannungsversorgungsschaltung einen DC/DC-Wandler aufweist. So kann gezielt eine gewünschte Versorgungsspannung bereitgestellt werden, und zwar unabhängig vom Betrag der im Zwischenkreis bereitgestellten Zwischenkreisspannung.

Wie bereits ausgeführt, gehört zu der Erfindung auch ein Frequenzumrichter, bei welchem eine Einspeiseeinheit zum Erzeugen einer gleichgerichteten Zwischenkreisspannung über einen Zwischenkreis mit zumindest einem Wechselrichter gekoppelt ist. Der Zwischenkreis zeichnet sich dabei dadurch aus, dass er eine Ausführungsform der erfindungsgemäßen Schaltungsanordnung aufweist, wobei jeweils eines der Leitelemente der Schaltungsanordnung einen Ausgang der Einspeiseeinheit zum Übertragen der Zwischenkreisspannung mit einem Eingang des zumindest einen Wechselrichters verbindet.

Im Folgenden ist die Erfindung noch einmal anhand eines konkreten Ausführungsbeispiels erläutert. Hierzu zeigt:
- FIG 1: einen Schaltplan eines Zwischenkreises mit einer Symmetrierschaltung gemäß dem Stand der Technik,
- FIG 2: einen Schaltplan eines Zwischenkreises, welcher eine Ausführungsform der erfindungsgemäßen Schaltungsanordnung darstellt,
- FIG 3: einen Schaltplan einer weiteren Ausführungsform der erfindungsgemäßen Schaltungsanordnung mit einer Spannungsversorgungsschaltung,
- FIG 4: einen Schaltplan einer Ausführungsform der erfindungsgemäßen Schaltungsanordnung ohne Entmagnetisierungswicklung,
- FIG 5: einen Schaltplan einer Ausführungsform der erfindungsgemäßen Schaltungsanordnung mit einem Entladewiderstand parallel zu einer Freilaufdiode,
- FIG 6: einen Schaltplan einer Ausführungsform der erfindungsgemäßen Schaltungsanordnung mit einem Entladewiderstand parallel zu einem Schaltelement und
- FIG 7: einen Schaltplan einer Ausführungsform der erfindungsgemäßen Schaltungsanordnung mit einem abschaltbaren Entladewiderstand.

Die gezeigten Beispiele stellen bevorzugte Ausführungsformen der Erfindung dar.

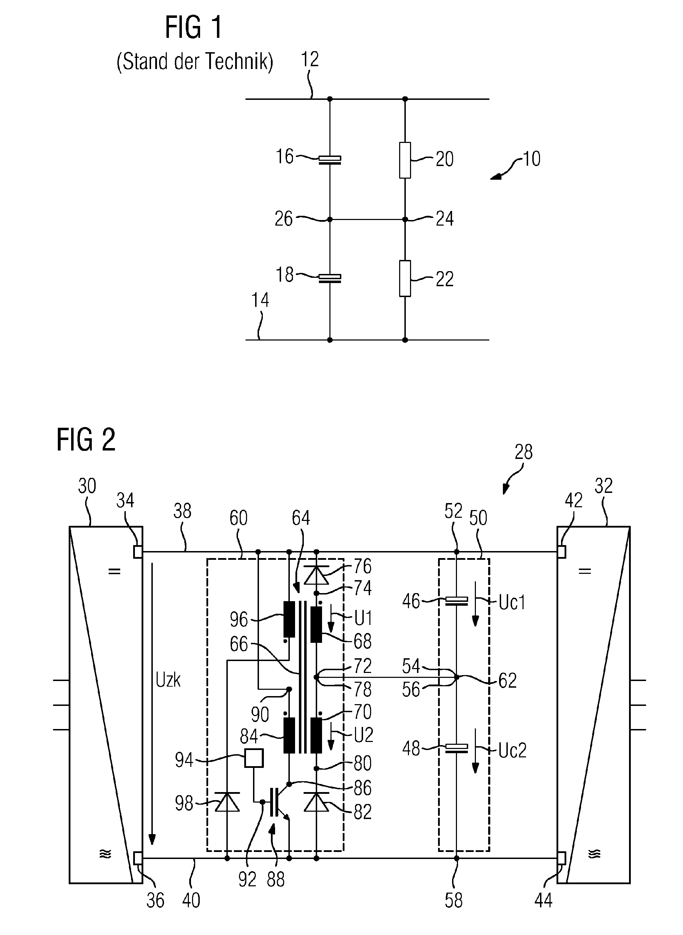

In FIG 1 ist ein Zwischenkreis 10 gezeigt, wie er aus dem Stand der Technik bekannt ist. Zwischen zwei Stromschienen 12, 14 ist für eine Energiespeicherung und Spannungsglättung eine Reihenschaltung aus zwei Kondensatoren 16, 18 geschaltet. Die zwischen den Stromschienen 12, 14 abfallende gleichgerichtete Spannung soll gleichmäßig auf die beiden Kondensatoren 16, 18 aufgeteilt werden. Durch ungleichmäßige Leckströme in den beiden Kondensatoren 16, 18 kann es aber zu einer Asymmetrie, d. h. Ungleichheit, zwischen den Kondensatorspannungen der Kondensatoren 16, 18 kommen. Um die Kondensatorspannungen zu symmetrieren, ist zwischen die Stromschienen 12, 14 ein Spannungsteiler aus ohmschen Widerständen 20, 22 geschaltet. Die Widerstände 20, 22 weisen gleiche Widerstandswerte auf, so dass sich an einer Abgriffstelle 24 des Spannungsteilers eine Spannung ergibt, die halb so groß ist wie die Spannung zwischen den Stromschienen 12, 14. Die Abgriffstelle 24 ist mit einer Verbindungsstelle 26 der Kondensatoren 16, 18 verbunden. Hierdurch werden die Kondensatorspannungen der Kondensatoren 16, 18 ebenfalls jeweils auf die Hälfte der Zwischenkreisspannung zwischen den Stromschienen 12, 14 gehalten. Nachteilig bei dem Zwischenkreis 10 ist, dass permanent ein Strom durch den Spannungsteiler aus den Widerständen 20, 22 fließt. Dies führt zu einer unerwünscht hohen Verlustleistung in dem Zwischenkreis 10.

In FIG 2 bis FIG 7 sind Schaltungen von Zwischenkreisen gezeigt, bei denen die Symmetrierung mittels eines Transformators erreicht wird, der als ein Flusswandler betrieben wird, wie es z.B. aus Schaltnetzteilen bekannt ist. In FIG 2 bis FIG 7 sind funktionsgleiche Elemente jeweils mit denselben Bezugszeichen versehen, um so die Übersicht zu erleichtern. Die Orientierung der Wicklungen ist in den Figuren in der üblichen Weise durch Punkte an den Enden der Wicklungssymbole angegeben.

Die gezeigten Schaltungen weisen gegenüber der Widerstandssymmetrierung, wie sie in FIG 1 gezeigt ist, den Vorteil auf, dass sie sowohl bei gleichen Kondensatorspannungen, d.h. wenn keine Symmetrierung notwendig ist, als auch bei ungleichen Kondensatorspannungen, wie sie durch ungleiche Leckströme der Kondensatoren verursacht werden können, deutlich weniger Verlustleistung erzeugen als die widerstandsbasierte Symmetrierung.

In FIG 2 ist ein Zwischenkreis 28 gezeigt, welcher in dem gezeigten Beispiel eine Einspeiseeinheit 30 mit einem Wechselrichter 32 und gegebenenfalls auch weiteren Wechselrichtern verbinden kann. Die Einspeiseeinheit 30, der Zwischenkreis 28 und der Wechselrichter 32 können zusammen Teil eines Frequenzumrichters sein, wie er von der Funktionalität her aus dem Stand der Technik bekannt ist. Die Einspeiseeinheit 30 und der Wechselrichter 32 können entsprechend der aus dem Stand der Technik bekannten Weise ausgestaltet sein. Gleichspannungsausgänge 34, 36 der Einspeiseeinheit 30 sind dabei jeweils an ein elektrisches Leitelement 38, 40 des Zwischenkreises 28 angeschlossen. Bei jedem der Leitelemente 38, 40 kann es sich um eine Stromschiene oder einen Draht oder ein anderes elektrisch leitfähiges Verbindungselement handeln. Die Einspeiseeinheit 30 erzeugt zwischen den Gleichspannungsausgängen 34, 36 eine gleichgerichtete Zwischenkreisspannung Uzk.

Die Zwischenkreisspannung Uzk wird durch die Leitelemente 38, 40 an Gleichspannungseingänge 42, 44 des Wechselrichters 32 übertragen. Um die Zwischenkreisspannung Uzk zu stabilisieren (d.h. in ihrem zeitlichen Verlauf zu glätten und Spannungseinbrüche auszugleichen), kann der Zwischenkreis 28 Zwischenkreiskondensatoren oder kurz Kondensatoren 46, 48 aufweisen. Die Kondensatoren 46, 48 sind zu einer Reihenschaltung 50 verschaltet. Der Kondensator 46 weist einen ersten Anschluss 52 und einen zweiten Anschluss 54 auf, die unterschiedlichen Polaritäten des Kondensators aufweisen. Der zweite Kondensator 48 weist entsprechender Weise einen Anschluss 56 und einen zweiten Anschluss 58 auf. Zum Bilden der Reihenschaltung 50 sind die Anschlüsse 54 und 56 verbunden. Die Reihenschaltung 50 ist zwischen die Leitelemente 38, 40 geschaltet, indem die freien Anschlüsse 52, 58 mit dem Leitelement 38 bzw. 40 elektrisch verbunden sind. Bei den Kondensatoren 46, 48 kann es sich beispielsweise um Elektrolytkondensatoren handeln. Die Symmetrierschaltung 60 kann auch mehr als zwei Sekundärspulen aufweisen, wenn entsprechend die Reihenschaltung 50 mehr als zwei Kondensatoren aufweist. Das durch die Beispiele veranschaulichte Prinzip funktioniert auch bei einer Vielfachreihenschaltung von Kondensatoren, wenn also mehr als zwei Kondensatoren die Reihenschaltung 50 bilden. Das Prinzip ist auch nicht auf Anwendungen in Antrieben beschränkt, d.h. insbesondere nicht auf Frequenzumrichter.

Die Zwischenkreisspannung Uzk fällt aufgrund der elektrischen Verbindung an den Anschlüssen 52, 58 über den Kondensatoren 46, 48 jeweils als eine Teilspannung ab: als Kondensatorspannung Uc1 über dem Kondensatoren 46 und als Kondensatorspannung Uc2 über dem Kondensator 48. Um die Kondensatoren 46, 48 gleichmäßig zu belasten, sollten die Kondensatorspannungen Uc1, Uc2 möglichst ähnlich, idealerweise gleich sein. Durch unterschiedliche Verschleißzustände und Leckströme in den Kondensatoren 46, 48 kann es aber zu einer Asymmetrie der Werte der Kondensatorspannungen Uc1, Uc2 kommen.

Um dies auszugleichen, ist in dem Zwischenkreis 28 eine Symmetrierschaltung 60 bereitgestellt, welche ebenfalls zwischen die Leitelemente 38, 40 geschaltet ist. Durch die Symmetrierschaltung 60 wird ein Potenzial einer Verbindungsstelle 62, die aus den Anschlüssen 54, 56 der Kondensatoren 46, 48 innerhalb der Reihenschaltung 50 gebildet ist, ein elektrisches Potenzial auf einen Wert eingestellt, durch welchen sich eine symmetrische Aufteilung der Kondensatorspannungen Uc1, Uc2 ergibt, d.h. die Kondensatorspannungen Uc1, Uc2 werden durch die Symmetrierschaltung 60 auf gleiche Werte eingestellt.

Die Symmetrierschaltung 60 weist einen Transformator 64 auf. Der Transformator 64 weist einen Transformatorkern 66 und in dem gezeigten Beispiel zwei Sekundärspulen 68, 70 auf. Die Sekundärspule 68 ist dem Kondensator 46, die Sekundärspule 70 dem Kondensator 48 zugeordnet. Dies bedeutet, dass bei der Sekundärspule 68 ein erster Spulenanschluss 72 mit dem Anschluss 54 und ein zweiter Spulenanschluss 74 der Sekundärspule 68 mit dem Anschluss 52 verbunden ist. Der Spulenanschluss 74 ist über eine Diode 76 mit dem Anschluss 52 verbunden. In gleicher Weise ist die Sekundärspule 70 mit einem ersten Spulenanschluss 78 mit dem Anschluss 56 und mit einem zweiten Spulenanschluss 80 mit dem Anschluss 58 des Kondensators 48 verbunden. Der Spulenanschluss 80 ist hierbei auch über eine Diode 82 mit dem Anschluss 58 verbunden. Die Dioden 76, 82 blockieren eine Stromfluss eines Gleichstroms von dem Leitelement 38 zu dem Leitelement 40 durch die Sekundärspulen 68, 70.

Der Transformator 64 weist primärseitig eine Primärspule 84 auf, die mit einem Spulenanschluss 86 über ein Schaltelement 88 mit einem der Leitelemente 40 und über einen weiteren Spulenanschluss 90 mit dem anderen Leitelement 38 verschaltet ist. Bei dem Schaltelement 88 kann es sich beispielsweise um einen Transistor, insbesondere einen FET, handeln. Der Spulenanschluss 86 und das Leitelement 40 sind dabei über die Kollektor-Emitter-Strecke bzw. Drain-Source-Strecke des Schaltelements 88 gekoppelt. Ein Steueranschluss 92 des Schaltelements 88 (Basis bzw. Gate im Falle eines Transistors) ist mit einer Schalteinheit 94 verbunden, die beispielsweise einen Mikrokontroller aufweisen kann. Die Schalteinheit 94 steuert das Schaltelement 88 und schaltet es abwechselnd in einen leitenden und einen sperrenden Zustand. Der Transformator 64 kann des Weiteren eine Entmagnetisierungsspule 96 aufweisen, die über eine Freilaufdiode 98 mit einem der Leitelemente 40 und beispielsweise direkt mit dem Leitelement 38 verbunden sein kann.

Die Symmetriereinrichtung 60 funktioniert wie ein Schaltnetzteil. Die Idee besteht darin, dass das Schaltnetzteil, d.h. die Symmetrierschaltung 60, mit dem Transformator 64 mit seinen Sekundärwicklungen oder Sekundärspulen 68, 70 bei gleicher Windungszahl auf der Sekundärseite zwei Spulenspannungen U1, U2 erzeugt. Bei Einsatz eines Flusswandlers, wie er in FIG 2 gezeigt ist, sind diese Spulenspannungen U1, U2 automatisch proportional zur Eingangsspannung, d.h. der Zwischenkreisspannung Uzk. Das Verhältnis von Sekundärspannung U1, U2 zu Primärspannung der Primärspule 84 ist auch proportional zur Eingangsspannung, d.h. der Zwischenkreisspannung Uzk. Wählt man die Windungszahlen so, dass die Sekundärspannungen U1, U2 etwas kleiner sind als die hier bei der Verwendung zweier Kondensatoren 46, 48 halbe Primärspannung (Uzk), also z.B. 5 % kleiner, so überträgt der Wandler nur dann Energie von den Spulen 68, 70 zu den Kondensatoren 46, 48, wenn eine der Kondensatorspannungen Uc1, Uc2 kleiner wird als die halbe Zwischenkreisspannung Uzk und nur an denjenigen Kondensator, dessen Kondensatorspannung Uc1, Uc2 kleiner ist.

Anstelle des in FIG 2 gezeigten Einphasen-Flusswandlers können auch alle anderen Topologien für Flusswandler verwendet werden. Z.B. sind als Alternativen zur in FIG 2 dargestellten Topologie auch asymmetrische Halbbrücken- oder Vollbrückenwandler für die Symmetrierung möglich. Diese Schaltungen benötigen mehr als einen aktiven Schalter, wie das Schaltelement 88.

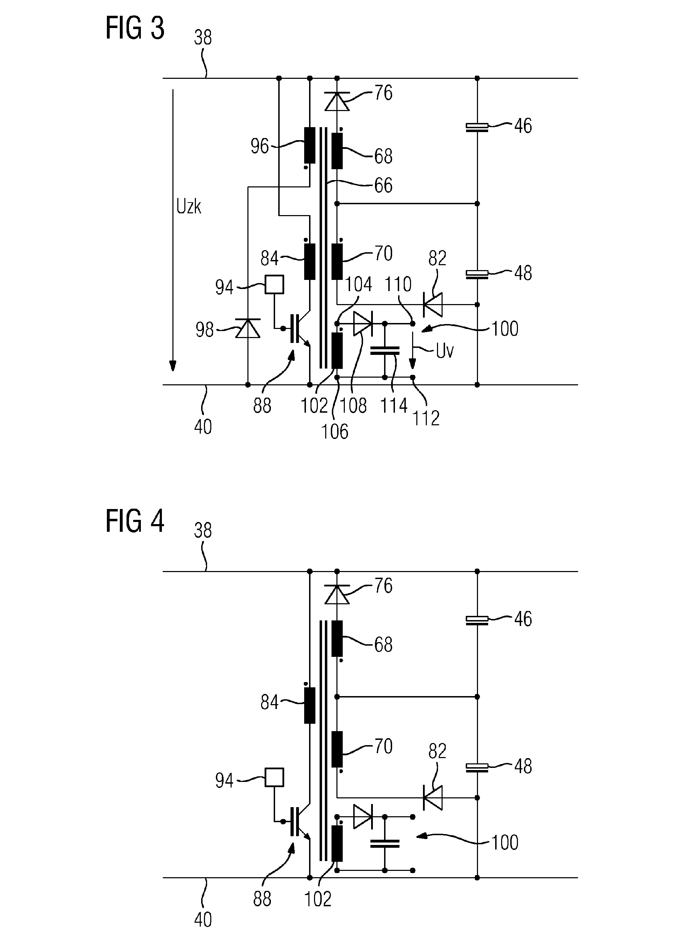

Die in FIG 2 gezeigte Topologie lässt sich in besonders vorteilhafter Weise mit einer Gerätespannungsversorgung 100 aus dem Zwischenkreis 28 kombinieren, wie es beispielhaft in FIG 3 gezeigt ist. Hierzu kann eine dritte Sekundärspule oder Zusatzspule 102 vorgesehen sein, die über den Transformatorkern 66 ebenfalls mit der Primärspule 84 und den Sekundärspulen 68, 70 magnetisch gekoppelt ist.

Die Zusatzspule 102 ist mit Eingangsanschlüssen 104, 106 der Gerätespannungsversorgung 100 verbunden. Der Eingangsanschluss 104 ist über eine Diode 108 mit einem Ausgangsanschluss 110 verbunden, der Eingangsanschluss 106 ist mit einem Ausgangsanschluss 112 verbunden. Zwischen den Ausgangsanschlüssen 110, 112 ist ein Glättungskondensator 114 geschaltet, über welchem eine gleichgerichtete Versorgungsspannung Uv abfällt, welche über die Ausgangsanschlüsse 110, 112 von Geräten, beispielsweise einem Mikrokontroller der Steuereinheit 94, abgegriffen wird. Die Zusatzspule 102 kann eine kleinere Windungszahl als die Sekundärspulen 68, 70 aufweisen, um den Spannungswert der Versorgungsspannung Uv auf einen gewünschten Wert einzustellen. Die Versorgungsspannung Uv ist aber in der in FIG 3 gezeigten Topologie immer noch proportional zur Zwischenkreisspannung Uzk. Ist dies nicht erwünscht, so kann ein (nicht dargestellter) DC-DC-Wandler (DC - Direct Current - Gleichstrom) zum Regeln eines Spannungswerts der Versorgungsspannung Uv den Ausgangsanschlüssen 110, 112 nachgeschaltet sein. Ein solcher DC-DC-Wandler kann beispielsweise auch gleichzeitig dazu benutzt werden, die Spannungsversorgungsschaltung 100 auch über eine ungeregelte 24-Volt-Quelle zu versorgen.

Eine weitere Ausführungsform für eine Kombination mit einer Spannungsversorgungsschaltung 100 ergibt sich, wenn die Sekundärspulen 68, 70 als Entmagnetisierungswicklungen genutzt werden, so dass die in FIG2 und FIG 3 gezeigte Entmagnetisierungwicklung 96 entfallen kann. Dies ist in FIG 4 beispielhaft veranschaulicht. Hier muss die Entmagnetisierungsleistung groß genug sein, damit die Leckverluste in den Kondensatoren 46, 48 ausgeglichen werden können. Dies kann in der bereits beschriebenen Weise sichergestellt werden. Das Windungszahlverhältnis primär/sekundär ist in dieser Ausführungsform auch nicht auf 1/2, bzw. allgemein auf 1/N, festgelegt.

Die erfindungsgemäße Schaltungsanordnung lässt sich auch vorteilhaft mit einer Entladeschaltung kombinieren, mittels welcher in einer Abschaltphase des Zwischenkreises, wenn der Zwischenkreis von einem Versorgungsnetz getrennt wird, die Kondensatoren 46, 48 entladen werden. Vorteil hierbei ist, dass der Entladewiderstand 116 entsprechend der erforderlichen Entladezeit dimensioniert werden kann und unabhängig vom Leckstrom der Kondensatoren 46, 48 ist. Der Entladewiderstand 116 kann auch in vorteilhafter Weise zur Dämpfung von Schwingungen der Schaltvorgänge dienen.

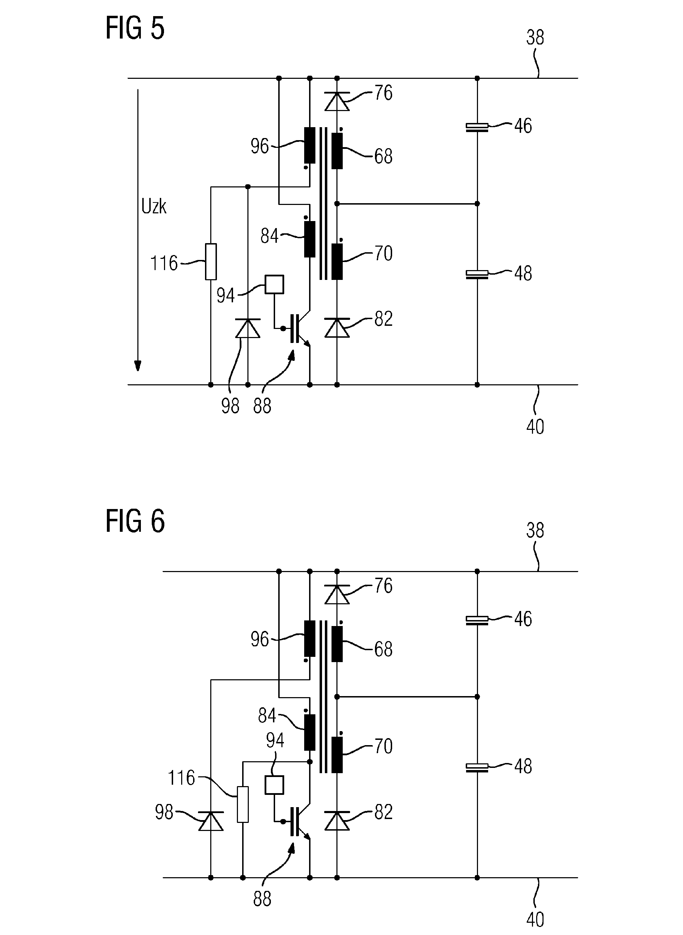

In FIG 5 ist eine Schaltvariante für den Entladewiderstand 116 gezeigt, bei welchem der Entladewiderstand 116 parallel zur Freilaufdiode 98 geschaltet ist. Hierdurch ergibt sich der Vorteil, dass über dem Entladewiderstand 116 nicht stets die volle Zwischenkreisspannung Uzk abfällt, und deshalb weniger Verlustleistung während des Betriebs des Zwischenkreises in dem Entladewiderstand 116 umgesetzt wird.

In FIG 6 ist eine Schaltungsvariante mit einem Entladewiderstand 116 gezeigt, welcher parallel zu dem Schaltelement 88 geschaltet ist. Wenn sich das Schaltelement 88 im elektrisch leitenden Zustand befindet, wird in dem Entladewiderstand 116 sogar überhaupt keine elektrische Leistung umgesetzt. Dies macht den Betrieb des Zwischenkreises besonders energieeffizient.

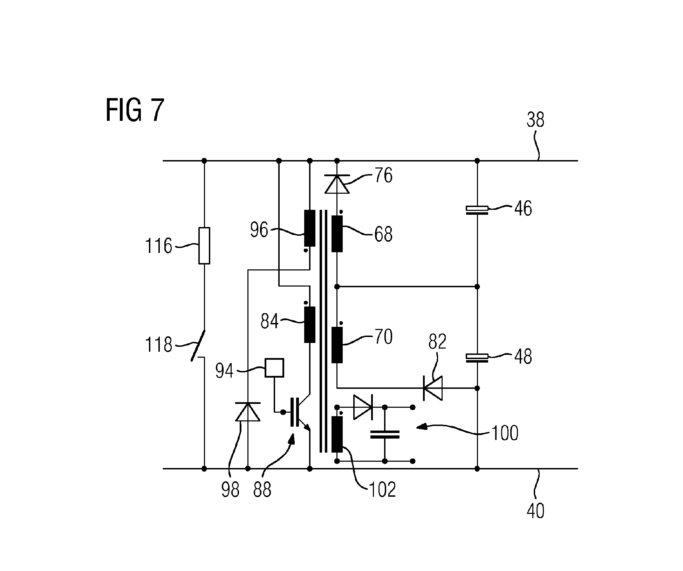

Die Entladeschaltung mit dem Entladewiderstand 116 muss aber nicht zwingend eine Verbindung zum Mittelpunkt des Zwischenkreises haben. Sie kann auch in einfacher Weise abschaltbar ausgeführt sein, wie es in FIG 7 veranschaulicht ist. Hier ist der Entladewiderstand 116 über einen Schalter 118 mit dem Leitelement 40 verbunden, während er mit dem anderen Leitelement 38 direkt verbunden sein kann. Im geöffneten Zustand des Schalters 118 wird in dem Entladewiderstand 116 ebenfalls keine Verlustleistung umgesetzt. Bei dem Schalter 118 kann es sich beispielsweise um ein Relais oder auch um einen Halbleiterschalter, wie beispielsweise einen Transistor oder einen Thyristor handeln.

Durch die Beispiele ist eine verlustarme Symmetrierschaltung zum Symmetrieren von in Reihe geschalteten Kondensatoren in einem Zwischenkreis veranschaulicht.

## Patentansprüche

1. Schaltungsanordnung zum Bereitstellen einer Zwischenkreisspannung (Uzk) in einem Gleichspannungs-Zwischenkreis (28), mit
- zwei elektrischen Leitelementen (38,40), zwischen denen die Zwischenkreisspannung (Uzk) anliegt,
- zumindest zwei Kondensatoren (46,48), die zu einer die Leitelemente (38,40) verbindenden Reihenschaltung (50) verschaltet sind, so dass sich ihre Kondensatorspannungen (Uc1, Uc2) zu der Zwischenkreisspannung (Uzk) aufaddieren, und
- einer Symmetrierschaltung (60) zum Symmetrieren der Kondensatorspannungen (Uc1, Uc2),
**dadurch gekennzeichnet, dass** die Symmetrierschaltung (60) einen Transformator (64) mit einer Primärspule (84) und zumindest einer Sekundärspule (68, 70) aufweist, wobei eines der Leitelemente (38) über die Primärspule (84) und ein dieser nachgeschaltetes, steuerbares erstes Schaltelement (88) mit dem anderen Leitelement (40) verbunden ist und bei der zumindest einen Sekundärspule (68,70) jeweils ein Spulenanschluss (72,78) mit einem Anschluss (54,56) eines der Kondensatoren (46,48) und ein anderer Spulenanschluss (74,80) mit einem anderen Anschluss (52,58) desselben Kondensators (46,48) verschaltet ist.

2. Schaltungsanordnung nach Anspruch 1, wobei die Symmetrierschaltung (60) für jeden Kondensator (46,48) jeweils eine in der beschriebenen Art mit diesem verschaltete Sekundärspule (68,70) aufweist.

3. Schaltungsanordnung nach Anspruch 1 oder 2, wobei eine Steuereinrichtung (94) bereitgestellt ist, die dazu ausgelegt ist, das Schaltelement (88) abwechselnd in einen leitenden und einen sperrenden Zustand zu schalten und hierdurch den Transformator (64) als Flusswandler zu betreiben.

4. Schaltungsanordnung nach Anspruch 3, wobei zumindest ein weiteres steuerbares Schaltelement bereitgestellt ist, über welches die Primärspule (84) oder ein Teil der Primärspule ebenfalls mit einem der Leitelemente (38,40) verbunden ist und die Steuereinheit (94) dazu ausgelegt ist, durch Ansteuern aller Schaltelemente eine Gegentaktflusswandlung von der Primärspule (84) zu der zumindest einen Sekundärspule (68, 70) durchzuführen.

5. Schaltungsanordnung nach einem der vorhergehenden Ansprüche, wobei bei der zumindest einen Sekundärspule (68,70) jeweils einer der Spulenanschlüsse (74,80) über eine Diode (76, 82) mit dem jeweiligen Kondensator (46,48) verbunden ist.

6. Schaltungsanordnung nach einem der vorhergehenden Ansprüche, wobei der Transformator (64) insgesamt N Sekundärspulen (68,70) aufweist und ein Windungszahlenverhältnis der Windungszahlen jeder Sekundärspule (68,70) zur Windungszahl der Primärspule (84) derart ausgelegt ist, dass die Primärspule (84) in jeder Sekundärspule (68,70) eine Induktionsspannung induziert, die kleiner als das 1/N-fache der Zwischenkreisspannung (Uzk) ist.

7. Schaltungsanordnung nach einem der vorhergehenden Ansprüche, wobei eines der Leitelemente (38) über eine zusätzliche Entmagnetisierungswicklung (96) und eine dieser nachgeschalteten Freilaufdiode (98) mit dem anderen Leitelement (40) verbunden ist.

8. Schaltungsanordnung nach einem der vorhergehenden Ansprüche, wobei die Wicklungen von zumindest zwei Sekundärspulen (68,70) gleiche Windungszahlen ausweisen.

9. Schaltungsanordnung nach einem der vorhergehenden Ansprüche, wobei die Wicklungen von zumindest zwei Sekundärspulen ungleiche Windungszahlen ausweisen.

10. Schaltungsanordnung nach einem der vorhergehenden Ansprüche, wobei der Transformator (64) dazu ausgestaltet ist, sich über die Sekundärspulen (68,70) zu entmagnetisieren.

11. Schaltungsanordnung nach einem der vorhergehenden Ansprüche, wobei ein die beiden Leitelemente (38,40) koppelnder ohmscher Entladewiderstand (116) bereitgestellt ist.

12. Schaltungsanordnung nach Anspruch 11, wobei der Entladewiderstand (116) über einen Schalter (118) mit einem der Leitelemente (40) verschaltet ist und/oder der Entladewiderstand (116) parallel zu einer Freilaufdiode (98) oder dem ersten Schaltelement (88) geschaltet ist.

13. Schaltungsanordnung nach einem der vorhergehenden Ansprüche, wobei der Transformator (64) eine Zusatzspule (102) aufweist, welche mit einem Eingang (104,106) einer Spannungsversorgungsschaltung (100) gekoppelt ist, insbesondere einer Spannungsversorgungsschaltung (100) mit einem DC-DC-Wandler.

14. Frequenzumrichter, bei welchem eine Einspeiseeinheit (30) zum Erzeugen einer gleichgerichteten Zwischenkreisspannung (Uzk) über einen Zwischenkreis (28) mit zumindest einem Wechselrichter (32) gekoppelt ist, **dadurch gekenn zeichnet** , dass der Zwischenkreis (28) eine Schaltungsanordnung nach einem der vorhergehenden Ansprüche aufweist, wobei jeweils eines der Leitelemente (38,40) der Schaltungsanordnung einen Ausgang (34,36) der Einspeiseeinheit (30) zum Übertragen der Zwischenkreisspannung (Uzk) mit einem Eingang (42,44) des zumindest einen Wechselrichters (32) verbindet.

15. Verfahren zum Symmetrieren von Kondensatorspannungen (Uc1, Uc2) in einer Reihenschaltung (50) von Kondensatoren (46,48), welche zwei Leitelemente (38,40) eines Gleichspannungs-Zwischenkreises (28) verbindet, wobei ein erster Kondensator (46) eine erste Kondensatorspannung (Uc1) und ein zweiter Kondensator (48) eine zweite Kondensatorspannung (Uc2) aufweist, **dadurch gekennzeichnet, dass** mittels eines Schaltnetzteils (64,88) die erste und die zweite Kondensatorspannung (Uc1, Uc2) angeglichen werden, wobei das Schaltnetzteil (64,88) primärseitig über die Leitelemente (38,40) mit elektrischer Leistung versorgt wird und sekundärseitig zumindest eine der Kondensatorspannungen (Uc1) mittels des Schaltnetzteils (64,88) eingestellt wird.
